**Europäisches Patentamt**

**European Patent Office**

**Office européen des brevets**

(19)

(11) Veröffentlichungsnummer : **0 189 533**
**B1**

(12)

# EUROPÄISCHE PATENTSCHRIFT

(45) Veröffentlichungstag der Patentschrift :
28.09.88

(51) Int. Cl.⁴ : **F 16 H 55/06**

(21) Anmeldenummer : 85114025.1

(22) Anmeldetag : 05.11.85

(54) **Bauteil bestehend aus einem durch insbesondere faserförmige Füllstoffe verstärkten polymeren Werkstoff.**

(30) Priorität : 31.01.85 DE 3503214

(43) Veröffentlichungstag der Anmeldung :
06.08.86 Patentblatt 86/32

(45) Bekanntmachung des Hinweises auf die Patenterteilung : 28.09.88 Patentblatt 88/39

(84) Benannte Vertragsstaaten :
DE FR GB IT

(56) Entgegenhaltungen :
EP-A- 0 074 241
WO-A-81 /013 75
DE-A- 2 935 205
FR-A- 2 430 553
GB-A- 2 054 084
GB-A- 2 116 286

(73) Patentinhaber : INA Wälzlager Schaeffler KG
Industriestrasse 1-3
D-8522 Herzogenaurach (DE)

(72) Erfinder : Rabe, Jürgen, Dipl.-Ing.
Talblick 6
D-8521 Aurachtal (DE)

EP 0 189 533 B1

## Beschreibung

Die Erfindung betrifft ein Bauteil, bestehend aus einem durch insbesondere faserförmige Füllstoffe verstärkten gieß- oder spritzbaren polymeren Werkstoff, welches eine Kontaktfläche aufweist, an der es mit einem anderen Teil gleitend in Eingriff steht.

Bauteile dieser Gattung sind aus der Beschreibungseinleitung zu der DE-A-2 935 205 allgemein bekannt und erreichen Festigkeits- und Steifigkeitswerte, die bis in das Gebiet der metallischen Werkstoff hineinreichen.

In jüngerer Zeit gibt es vermehrt Bestrebungen, derartige Bauteile wegen ihrer hohen Festigkeit und Steifigkeit trotz der Probleme einzusetzen, die beim Zusammenwirken mit anderen Teilen dann auftreten, wenn die obengenannten Bauteile mit den anderen Teilen gleitend in Eingriff stehen. Die dabei auftretenden Gleitbewegungen können sowohl unmittelbar funktionsbedingt sein, z. B. im Falle eines Gleitlagers, als auch als an sich unerwünschter Nebeneffekt auftreten, z. B. im Falle von schlupfbehafteten Abrollbewegungen, wie sie in Keil-, Vielkeil- und Flachriemengetrieben zwischen Riemen und Riemenscheibe vorliegen, oder im Falle von Zahnriemengetrieben, wo trotz des an sich formschlüssigen Wirkungsprinzips Relativbewegungen zwischen Zahnriemen und Riemenscheibe auftreten.

So hat sich bei einem aus der DE-A-3 025 705 bekannten Kupplungsausrücklager mit einer durch Füllstoffe verstärkten Schiebehülse, die auf einem Führungsrohr gleitet, gezeigt, daß die Schiebehülse den Festigkeitsanforderungen zwar gewachsen ist, daß infolge der auch an der Kontaktfläche der Schiebehülse mit dem Führungsrohr vorliegenden Füllstoffe aber die Oberfläche des Führungsrohres durch abrasiven Verschleiß zerstört wird, so daß ein einwandfreies Gleiten der Schiebehülse auf dem Rohr nicht mehr gewährleistet ist.

Ebenso traten bei bereits vorgeschlagenen Flachriemenscheiben aus einem durch faserförmige Füllstoffe verstärkten polymeren Werkstoff Probleme auf, derart, daß die Riemen wegen der an den Kontaktflächen der Riemenscheiben vorliegenden faserförmigen Füllstoffe infolge von durch den auftretenden Schlupf bedingtem Verschleiß vorzeitig ausfielen.

Aus der WO-81/01 375 ist es bekannt, auf insbesondere metallische Substrate zur Verbesserung der Reib- und Gleiteigenschaften einen wärmehärtbaren Polyimid-Lack aufzubringen. Dieser polymere Werkstoff ist im Ausgangszustand flüssig und muß bei hohen Temperaturen gehärtet werden, wodurch er die gewünschten Eigenschaften erhält. Dies bekannte Verfahren hat den Nachteil, daß es bei Anwendung auf die gattungsgemäßen Bauteile aus polymeren Werkstoffen, die spritz- oder gießbar sind, versagt, weil diese Werkstoffe bei den zur Aushärtung des Polyimid-Lacks notwendigen hohen Temperaturen bereits schmelzen.

Der Erfindung liegt die Aufgabe zugrunde, ein gattungsgemäßes Bauteil zu schaffen, bei dem abrasiver Verschleiß des mit der Kontaktfläche in gleitendem Eingriff stehenden anderen Teils vermieden ist, ohne daß das Bauteil an Festigkeit und Steifigkeit einbüßt.

Erfindungsgemäß wird dies dadurch erreicht, daß das Bauteil an seiner Kontaktfläche eine im Vergleich zu seinen Abmessungen dünne Schicht eines gieß- oder spritzbaren polymeren Werkstoffs aufweist, der frei von verstärkenden Füllstoffen ist, wobei die Schicht mit dem Bauteil einstückig ist.

Hierdurch wird erreicht, daß durch die Füllstoffe bedingter abrasiver Verschleiß an dem anderen Teil nicht auftreten kann. Da die Schicht im Vergleich zu den Abmessungen des Bauteils dünn ist, tritt eine Minderung der Festigkeit und Steifigkeit des Bauteils nicht ein.

Die Herstellung des Bauteils erfolgt vorzugsweise in einem Arbeitsgang, indem der Werkstoff der Schicht und der des Bauteils durch verschiedene Kanäle im wesentlichen gleichzeitig in eine Form eingebracht werden. Die beiden Werkstoffe verbinden sich dann an der Begrenzungsfläche zwischen der Schicht und dem Bauteil im warmplastischen Zustand. Wenn der Werkstoff der Schicht einen niedrigeren Schmelzpunkt als der Werkstoff des Bauteils hat, kann die gieß- oder spritzbare Schicht aber auch separat gefertigt und in die Form eingelegt werden. Auch dann tritt beim Einbringen des Werkstoffs des Bauteils eine innige Verbindung zwischen den beiden Werkstoffen ein, da der der Schicht nochmals angeschmolzen wird.

Nach einer Ausführung der Erfindung können die Schicht und das Bauteil aus dem gleichen polymeren Werkstoff bestehen, wobei nach einer Variante der Erfindung die in dem Bauteil vorliegende Konzentration der Füllstoffe in Richtung auf die Kontaktfläche auf die Konzentration Null abnimmt.

Da nach einer Variante der Erfindung der die Schicht bildende polymere Werkstoff im Zusammenwirken mit dem Werkstoff des anderen Teils gute Verschleißeigenschaften aufweist, können der Werkstoff des Bauteils und die Art und Konzentration der in ihm vorliegenden Füllstoffe ausschließlich unter dem Gesichtspunkt der Festigkeit und Steifigkeit optimal gewählt werden.

Falls dies wünschenswert sein sollte, kann nach einer Ausgestaltung der Erfindung das Verschleißverhalten verbessert werden, indem der die Schicht bildende polymere Werkstoff ein Trockenschmiermittel enthält, wobei nach einer letzten Variante der Erfindung der Anteil des Trockenschmiermittels an dem die Schicht bildenden polymeren Werkstoff wenigstens 0,25 Gewichtsprozente beträgt.

In den beigefügten Figuren sind Ausführungsbeispiele der Erfindung dargestellt. Es zeigen:

Fig. 1 eine erfindungemäß ausgebildete Zahnriemenscheibe in teilweise geschnittener Darstellung

Fig. 2 einen Schnitt entsprechend der Linie II-II in Fig. 1,

Fig. 3 in vergrößertem Maßstab die Einzelheit III gemäß Fig. 2,

Fig. 4 in vergrößertem Maßstab die Einzelheit IV gemäß Fig. 1,

Fig. 5 eine erfindungsgemäß ausgebildete Exzenterwelle in perspektivischer Darstellung,

Fig. 6 einen Schnitt entsprechend der Linie VI-VI in Fig. 5 und

Fig. 7 eine erfindungsgemäß ausgebildete Exzenterwelle in teilweise geschnittener Darstellung.

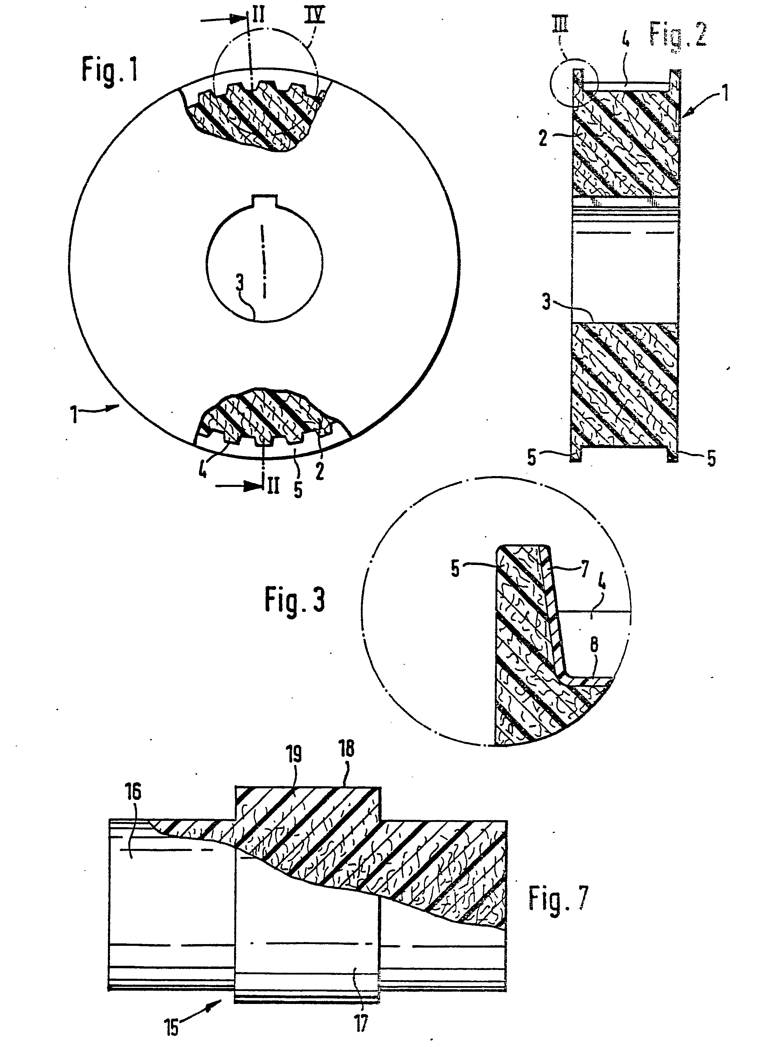

Die in den Figuren 1 und 2 gezeigte Zahnriemenscheibe 1 besteht aus einem durch faserförmige Füllstoffe verstärkten scheibenförmigen Grundkörper 2, der mit einer zentralen Bohrung 3 versehen ist, einer am Umfang des Grundkörpers 2 vorgesehene Verzahnung 4 sowie auf beiden Seiten der Verzahnung 4 vorgesehen Bordscheiben 5, welche ein seitliches Ablaufen des Zahnriemens von der Zahnriemenscheibe 1 im Betrieb verhindern.

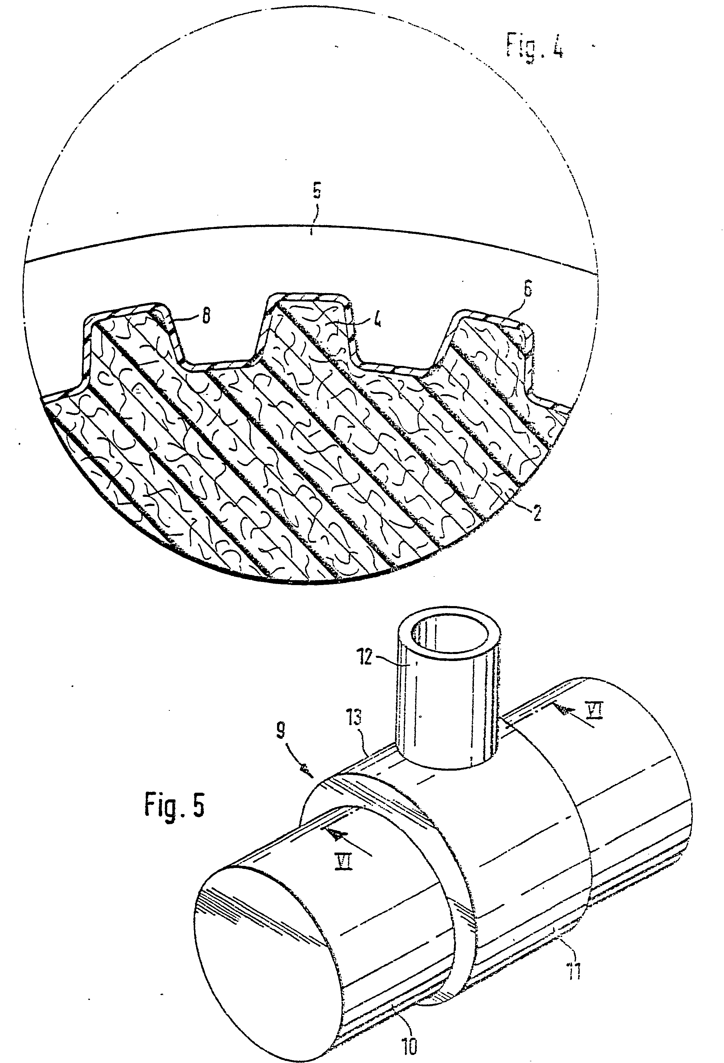

Da bekanntermaßen trotz des an sich formschlüssigen Wirkungsprinzips des Zahnriementriebs Relativbewegungen sowohl zwischen den Verzahnungen des Zahnriemens und der Zahnriemenscheibe als auch zwischen den Flanken des Zahnriemens und den Bordscheiben auftreten, sind, wie aus den Figuren 3 und 4 zu entnehmen ist, die gesamte Oberfläche 6 der Verzahnung 4 der Zahnriemenscheibe 1 und die der Verzahnung 4 zugewandten Flächen 7 der Bordscheiben 5 mit einer dünnen Schicht 8 eines polymeren Werkstoffs versehen, der, wie durch die vom Grundkörper 2 abweichende Schraffur in den Figuren 3 und 4 verdeutlicht ist, frei von Füllstoffen ist.

Fig. 5 zeigt eine Exzenterwelle 9, welche aus einer Welle 10 besteht, die mit einem Exzenterabschnitt 11 versehen ist. Ein Stößel 12 steht mit der äußeren Mantelfläche 13 des Exzenterabschnittes 11 in gleitendem Eingriff.

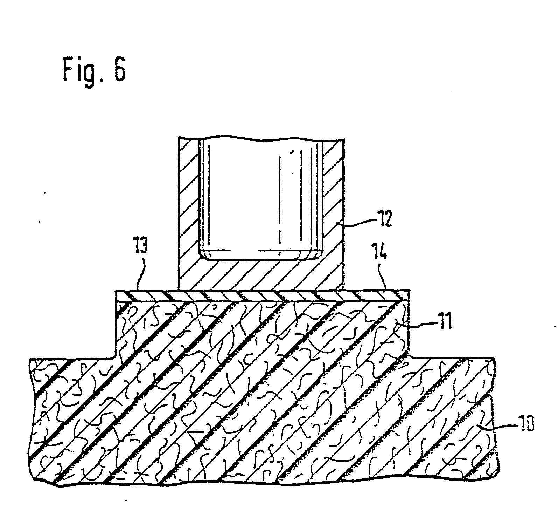

Wie in Fig. 6 anhand der Schraffur erkennbar ist, sind die Welle 10 und der Exzenterabschnitt 11 durch faserförmige Füllstoffe verstärkt, wobei jedoch der Exzenterabschnitt 11 an seinem Umfang mit einer Schicht 14 eines polymeren Werkstoffs versehen ist, der, wie ebenfalls aus der Schraffur ersichtlich ist, frei von Füllstoffen ist.

Fig. 7 zeigt schließlich eine Exzenterwelle 15, die sowohl im Bereich der Welle 16 als auch des Exzenterabschnittes 17 mit faserförmigen Füllstoffen armiert ist. Dabei nimmt jedoch die in der Exzenterwelle 15 vorliegende Konzentration der Füllstoffe radial nach außen derart ab, daß der Exzenterabschnitt 17 im Bereich seiner äußeren Mantelfläche 18 eine Schicht 19 aufweist, in der er frei von Füllstoffen ist.

Im Falle aller Ausführungsbeispiele ist die Fläche, die mit einem anderen Teil in gleitendem Eingriff steht, jeweils frei von Füllstoffen, so daß abrasiver Verschleiß, der durch die Füllstoffe verursacht ist, nicht auftreten kann.

Da die Dicke der Schicht im Vergleich zu den Abmessungen des jeweiligen Bauteils gering ist, werden die Festigkeits- und Steifigkeitseigenschaften des Bauteils nicht negativ beeinflußt.

Selbstverständlich soll der Anwendungsbereich der Erfindung nicht auf die in den Ausführungsbeispielen gezeigten Bauteile beschränkt sein. Vielmehr können beliebige Bauteile erfindungsgemäß gestaltet werden.

**Patentansprüche**

1. Bauteil, bestehend aus einem durch insbesondere faserförmige Füllstoffe verstärkten gieß- oder spritzbaren polymeren Werkstoff, welches eine Kontaktfläche aufweist, an der es mit einem anderen Teil gleitend in Eingriff steht, dadurch gekennzeichnet, daß das Bauteil (1, 9, 15) an seiner Kontaktfläche (6 und 7, 13, 18) eine im Vergleich zu seinen Abmessungen dünne Schicht (8, 14, 19) eines gieß- oder spritzbaren polymeren Werkstoff aufweist, der frei von verstärkenden Füllstoffen ist, wobei die Schicht (8, 14, 19) mit dem Bauteil (1, 9, 15) einstückig ist.

2. Bauteil nach Anspruch 1, dadurch gekennzeichnet, daß die Schicht (19) und das Bauteil (15) aus dem gleichen polymeren Werkstoff bestehen.

3. Bauteil nach Anspruch 2, dadurch gekennzeichnet, daß die in dem Bauteil (15) vorliegende Konzentration der Füllstoffe in Richtung auf die Kontaktfläche (18) auf die Konzentration Null abnimmt.

4. Bauteil nach einem der Ansprüche 1 bis 3, dadurch gekennzeichnet, daß der die Schicht (8, 14, 19) bildende polymere Werkstoff im Zusammenwirken mit dem Werkstoff des anderen Teils gute Verschleißeigenschaften aufweist.

5. Bauteil nach einem der Ansprüche 1 bis 4, dadurch gekennzeichnet, daß der die Schicht bildende polymere Werkstoff ein Trockenschmiermittel enthält.

6. Bauteil nach Anspruch 5, dadurch gekennzeichnet, daß der Anteil des Trockenschmiermittels an dem die Schicht bildenden polymeren Werkstoff wenigstens 0,25 Gewichtsprozente beträgt.

**Claims**

1. Component consisting of a mouldable or injectable polymer material reinforced by a filler, especially a fibrous filler and which has a contact surface which engages slidably with another part, characterized in that the component (1, 9, 15) has on its contact surface (6 and 7, 13, 18) a layer (8, 14, 19), which is thin in comparison with the dimensions of the component, of a mouldable or injectable polymer material which is free from reinforcing filler, the layer (8, 14, 19) being in one piece with the component.

2. Component according to claim 1, characterized in that the layer (19) and the component (15) consist of the same polymer material.

3. Component according to claim 2, characterized in that the concentration of the filler in the component (15) decreases in the direction of the contact surface (18) to zero concentration.

4. Component according to one of claims 1 to 3, characterized in that the polymer material forming the layer (8, 14, 19) has good wear characteristics in conjunction with the material of the other part.

5. Component according to one of claims 1 to 4, characterized in that the polymer material forming the layer contains a dry lubricant.

6. Component according to claim 5, characterized in that the proportion of the dry lubricant in the polymer material forming the layer amounts to at least 0.25 weight percent.

## Revendications

1. Pièce, constituée par une matière polymère à couler ou à mouler par injection renforcée par des charges, notamment fibreuses, qui présente une surface de contact avec laquelle une autre pièce est en contact glissant, caractérisée en ce que la pièce (1, 9, 15) comporte à sa surface de contact (6 et 7, 13, 18) une couche (8, 14, 19) mince d'une matière polymère par rapport à ses dimensions, qui est dépourvue de charges de renforcement, la couche (8, 14, 19) faisant corps avec la pièce (1, 9, 15).

2. Pièce suivant la revendication 1, caractérisée en ce que la couche (19) et la pièce (15) sont constituées par la même matière polymère.

3. Pièce suivant la revendication 2, caractérisée en ce que la concentration des charges présente dans la pièce (15) diminue en direction de la surface de contact (18) en tendant vers une concentration nulle.

4. Pièce suivant l'une des revendications 1 à 3, caractérisée en ce que la matière polymère constituant la couche (8, 14, 19) présente de bonnes caractéristiques d'usure en coopérant avec la matière de l'autre pièce.

5. Pièce suivant l'une des revendications 1 à 4, caractérisée en ce que la matière polymère constituant la couche renferme un lubrifiant sec.

6. Pièce suivant la revendication 5, caractérisée en ce que la proportion du lubrifiant sec dans la matière polymère constituant la couche est d'au moins 0,25 % en poids.

0 189 533

Fig.1

Fig.2

Fig.3

Fig.7

Fig. 4

Fig. 5

Fig. 6